(19) Europäisches Patentamt
European Patent Office
Office européen des brevets

(11) Veröffentlichungsnummer : **0 067 381**
**B1**

(12) # EUROPÄISCHE PATENTSCHRIFT

(45) Veröffentlichungstag der Patentschrift : **21.03.84**

(21) Anmeldenummer : **82104908.7**

(22) Anmeldetag : **04.06.82**

(51) Int. Cl.³ : **C 07 C103/38**, C 07 C102/00, C 07 C147/10, C 07 C147/14, C 07 C149/42, A 01 N 37/24

(54) **Anilide, Verfahren zu ihrer Herstellung und diese enthaltende Herbizide.**

(30) Priorität : **15.06.81 DE 3123733**

(43) Veröffentlichungstag der Anmeldung : **22.12.82 Patentblatt 82/51**

(45) Bekanntmachung des Hinweises auf die Patenterteilung : **21.03.84 Patentblatt 84/12**

(84) Benannte Vertragsstaaten : **AT BE CH DE FR GB IT LI NL SE**

(56) Entgegenhaltungen :
**DE-A- 2 120 708**
**US-A- 3 976 470**

(73) Patentinhaber : **BASF Aktiengesellschaft**
**Carl-Bosch-Strasse 38**
**D-6700 Ludwigshafen (DE)**

(72) Erfinder : **Becker, Rainer, Dr.**
**Sonnenwendstrasse 83**
**D-6702 Bad Duerkheim (DE)**
Erfinder : **Schirmer, Ulrich, Dr.**
**Berghalde 79**
**D-6900 Heidelberg (DE)**
Erfinder : **Wuerzer, Bruno, Dr. Dipl.-Landwirt**
**Ruedigerstrasse 13**
**D-6701 Otterstadt (DE)**

EP 0 067 381 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Anilide, Verfahren zu ihrer Herstellung und diese enthaltende Herbizide

Die vorliegende Erfindung betrifft Anilide, ein Verfahren zu ihrer Herstellung, Herbizide, die diese Verbindungen als Wirkstoffe enthalten, sowie ein Verfahren zur Bekämpfung unerwünschten Pflanzenwuchses mit diesen Verbindungen.

Es ist bekannt, 3,4-Dichlorpropionsäureanilid als Herbizid, insbesondere als Reisherbizid, zu verwenden (GB-PS 903 766). Seine Verträglichkeit für Sojabohnen und Mais ist jedoch unzulänglich. Eine gewisse Verbesserung der Selektivität von herbiziden Aniliden in diesen Kulturen wurde durch S-Arylanilide, z. B. durch

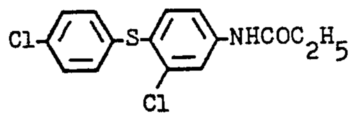 (GB-PS 1 344 735),

oder durch O-Arylanilide, z. B. durch

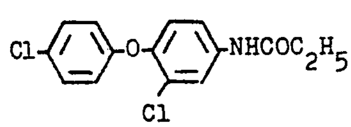 (US-PS 3 976 470),

erzielt.

Es wurde nun gefunden, daß Anilide der allgemeinen Formel I

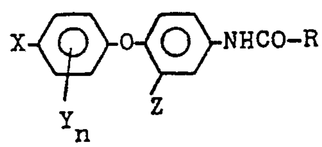 (I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy, oder

X und Y gemeinsam einen gesättigten oder ungesättigten 3- oder 4-gliedrigen Alkylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen, bedeuten und

Z für Trifluormethyl steht, wenn X Halogenalkoxy ist,

unerwünschte Pflanzen in Kulturen, wie Reis, Getreide, Erdnüsse und andere, sehr gut bekämpfen. Überraschend ist dabei die unerwartet gute Verträglichkeit einzelner Verbindungen für Sojapflanzen und Mais, wobei außerordentlich wichtige breitblättrige Unkrautarten abgetötet werden.

X und Y bedeuten beispielsweise Wasserstoff, Phenyl oder Benzyloxy, Fluor, Brom, Jod, wobei Y auch Chlor bedeuten kann, sowie unverzweigte oder verzweigte Alkyl-, Alkoxy-, Halogenalkyl- oder Halogenalkoxy-, Alkylthio-, Alkylsulfinyl- oder Alkylsulfonylreste mit jeweils 1 bis 6 Kohlenstoffatomen, vorzugsweise mit 1 bis 4 Kohlenstoffatomen, oder Cycloalkylreste mit 3 bis 6 Kohlenstoffatomen, wie Methyl, Ethyl, Isopropyl, n-Propyl, Isobutyl, tert.-Butyl, n-Pentyl, n-Hexyl, Methoxy, Ethoxy, Isopropoxy, sec-Butoxy, Trifluormethyl, Difluormethoxy, Trifluormethoxy, 2-Chlor-2,1,1-trifluorethoxy, Methylthio, Methylsulfonyl, Isopropylthio, Cyclohexyl. X und Y können auch zusammen einen gegebenenfalls durch Methyl substituierten 3- oder 4-gliedrigen Alkylen- oder Alkenylenrest bedeuten, wenn n 1 ist. Beispiele hierfür sind Trimethylen, Tetramethylen, 1,1,3,3-Tetramethyltrimethylen, Buta-1,3-dienylen.

Z bedeutet beispielsweise Wasserstoff oder Halogen, z. B. Fluor, Chlor, Brom. Z kann außerdem Trifluormethyl bedeuten, wenn X Halogenalkoxy ist.

R bedeutet beispielsweise Alkyl mit 1 bis 4 C-Atomen oder Alkoxyalkyl mit 2 bis 5 C-Atomen, wie Methyl, Ethyl, n-Propyl, i-Propyl, n-Butyl, Methoxymethyl, l-Methoxyethyl.

Bevorzugte Verbindungen der Formel I sind solche, bei denen X einen Alkyl-, Alkoxy- oder Halogenalkoxyrest mit jeweils 1 bis 4 Kohlenstoffatomen bedeutet.

Man erhält die Anilide der Formel I beispielsweise durch Umsetzung der Amine der Formel II

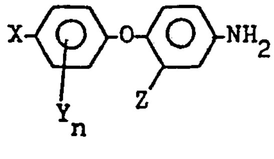 (II)

in der X, Y, Z, n die obengenannten Bedeutungen haben, mit den Säurechloriden der Formel III

Cl—CO—R (III)

oder den Säureanhydriden der Formel R—CO—O—CO—R, wobei R die obengenannte Bedeutung hat, in Gegenwart eines säurebindenden Mittels und eines Lösungsmittels.

Geeignete Lösungsmittel sind z. B. Wasser oder Alkohole, insbesondere aliphatische Alkohole, wie Methanol, Ethanol, Isopropanol, chlorierte aliphatische Kohlenwasserstoffe, wie Chloroform, Methylenchlorid, Dichlorethan oder Ketone, wie Aceton, Diethylketon, Methylethylketon.

Als säurebindende Mittel kommen die üblichen Basen, wie Alkalihydroxide, -hydrogencarbonate, -carbonate, Erdalkalioxide, -hydroxide, -hydrogencarbonate, -carbonate sowie tertiäre organische Basen, in Betracht. Besonders geeignet sind z. B. Natriumhydroxid, Natriumcarbonat, Natriumhydrogencarbonat, Calciumoxid, Triethylamin, Pyridin, N,N-Dimethylanilin, N,N-Dimethyl-cyclohexylamin, Chinolin und Tri-n-butylamin.

Die Ausgangsstoffe der Formeln II und III (einschließlich der Säureanhydride) werden in ungefähr stöchiometrischem Verhältnis eingesetzt, d. h. in einem Unter- bzw. Überschuß von bis zu 10 Mol.% Ausgangsstoff der Formel II gegenüber Ausgangsstoff der Formel III. Die Umsetzung wird bei einer Temperatur im Bereich zwischen − 20 und + 150 °C, vorzugsweise zwischen + 20 und + 60 °C, durchgeführt.

Die Amine der Formel II sind zum Teil bekannt ; sie können nach den in Houben-Weyl, Methoden der organ. Chemie, Bd. XI/1, S. 341 ff., Georg Thieme-Verlag, Stuttgart, 1957, beschriebenen Methoden hergestellt werden. Die Säurechloride der Formel III und die Säureanhydride sind bekannt.

Beispiel 1

24,8 Gewichtsteile 4-(4'-Ethylphenoxy-)3-chloranilin wurden in 200 Gewichtsteilen Aceton gelöst und mit 12,6 Gewichtsteilen Natriumhydrogencarbonat, gelöst in 150 Gewichtsteilen Wasser, versetzt. Anschließend wurden bei 20 °C 11,6 Gewichtsteile Propionsäurechlorid zugetropft. Man ließ einige Stunden bei Raumtemperatur nachrühren, gab dann die Mischung in Eiswasser und saugte ab. Erhalten wurden 28,9 Gewichtsteile N-4-(4'-Ethylphenoxy)-3-chlorphenyl-propionsäureamid vom Fp. 83 bis 85 °C.

Nach entsprechenden Verfahren wurden beispielsweise folgende Verbindungen hergestellt :

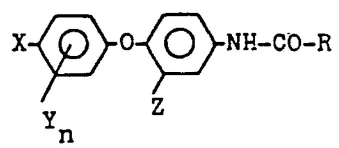

| Nr. | X | $Y_n$ | Z | R | Fp |
|---|---|---|---|---|---|
| 1 | $C_2H_5$ | H | Cl | $C_2H_5$ | 83 - 85°C |
| 2 | $C_6H_5$ | H | Cl | $C_2H_5$ | 131 - 133°C |
| 3 | $OCH_3$ | H | Cl | $C_2H_5$ | 100 - 102°C |
| 4 | $OCHF_2$ | H | H | $C_2H_5$ | 108 - 110°C |
| 5 | $OCHF_2$ | H | Cl | $C_2H_5$ | 71 - 73°C |
| 6 | $OC_2H_5$ | H | Cl | $C_2H_5$ | 97 - 100°C |
| 7 | $CH_3$ | H | Cl | $C_2H_5$ | 97 - 99°C |
| 8 | H | H | Cl | $C_2H_5$ | 110 - 112°C |
| 9 | n-$C_3H_7$ | H | Cl | $C_2H_5$ | 67 - 69°C |
| 10 | i-$C_3H_7$ | H | Cl | $C_2H_5$ | 92 - 93°C |
| 11 | t-$C_4H_9$ | H | Cl | $C_2H_5$ | 118 - 121°C |
| 12 | n-$C_4H_9$ | H | Cl | $C_2H_5$ | 78 - 80°C |
| 13 | $C_6H_{11}$ | H | Cl | $C_2H_5$ | 130 - 132°C |
| 14 | i-$C_4H_9$ | H | Cl | $C_2H_5$ | Öl |
| 16 | $OC_3H_7$(n) | H | Cl | $C_2H_5$ | 72 - 75°C |
| 17 | $OCF_2CHFCl$ | H | Cl | $C_2H_5$ | 79 - 81°C |
| 18 | $OCF_2CHFCl$ | H | H | $C_2H_5$ | 123 - 125°C |

(Fortsetzung)

| Nr. | X | $Y_n$ | Z | R | Fp |
|---|---|---|---|---|---|
| 19 | $OCH_3$ | H | Cl | $CH_2OCH_3$ | 68 - 70°C |
| 20 | $SCH_3$ | H | Cl | $C_2H_5$ | 98 - 100°C |
| 21 | $CH_3$ | 3-$CH_3$ | Cl | $C_2H_5$ | 84 - 86°C |
| 22 | $-(CH_2)_3-$ | | Cl | $C_2H_5$ | 93 - 95°C |
| 23 | $-(CH_2)_4-$ | Y in 3-Pos. | Cl | $C_2H_5$ | 113 - 114°C |
| 24 | $-(CH)_4-$ | | Cl | $C_2H_5$ | 82 - 84°C |
| 25 | J | H | Cl | $C_2H_5$ | 113 - 115°C |
| 27 | H | 3-$OCH_3$ | Cl | $C_2H_5$ | Öl |
| 28 | H | 3-Cl | Cl | $C_2H_5$ | 101 - 103°C |
| 29 | i-$C_5H_{11}$ | H | Cl | $C_2H_5$ | 83 - 85°C |
| 30 | $CH_2C_6H_5$ | H | Cl | $C_2H_5$ | 91 - 94°C |
| 31 | $-C(CH_3)_2CH_2C(CH_3)_2-$ Y in 3-Pos. | | Cl | $C_2H_5$ | 107 - 110°C |
| 32 | $OCH_3$ | H | Br | $C_2H_5$ | 80 - 83°C |
| 33 | $C_2H_5$ | H | Cl | $CH(CH_3)OCH_3$ | 51 - 53°C |
| 34 | $OCHF_2$ | H | Cl | $CH(CH_3)OCH_3$ | Öl |
| 35 | $OCHF_2$ | H | H | $CH(CH_3)OCH_3$ | 98 - 100°C |
| 40 | $C_2H_5$ | H | Cl | $CH(CH_3)_2$ | 108 - 110°C |
| 41 | $C_2H_5$ | H | Cl | n-$C_4H_9$ | Öl |
| 45 | $OCH_3$ | H | Cl | $CH(CH_3)OCH_3$ | Öl |
| 46 | $C_6H_5$ | H | H | $C_2H_5$ | 202 - 204°C |
| 48 | $OCH_3$ | H | Cl | $CH(CH_3)OCH_3$ | 98- 100°C |
| 49 | $OCHF_2$ | H | $CF_3$ | $C_2H_5$ | Öl |

In entsprechender Weise können die folgenden Verbindungen hergestellt werden :

| Nr. | X | $Y_n$ | Z | R |
|---|---|---|---|---|
| 15 | $OC_3H_7$(i) | H | Cl | $C_2H_5$ |
| 26 | Br | H | Cl | $C_2H_5$ |
| 36 | $CF_3$ | H | Cl | $C_2H_5$ |
| 37 | H | H | H | n-$C_3H_7$ |
| 38 | $C_2H_5$ | H | Cl | n-$C_3H_7$ |
| 39 | $CH(CH_3)_2$ | H | Cl | n-$C_3H_7$ |
| 42 | $C_2H_5$ | H | Br | $C_2H_5$ |
| 43 | n-$C_3H_7$ | H | Cl | $CH(CH_3)OCH_3$ |
| 44 | $CH(CH_3)_2$ | H | Cl | $CH(CH_3)OCH_3$ |
| 47 | $OCH_3$ | H | Cl | n-$C_3H_7$ |

Der Einfluß von Vertretern der neuen herbiziden Anilide auf das Wachstum von erwünschten und unerwünschten Pflanzen wird anhand von Gewächshausversuchen gezeigt :

(Siehe Tabelle, Seite 5 f.)

Liste der bei den Versuchen verwendeten Pflanzen

| Botanischer Name | Abkürzung in Tabelle | Deutscher Name |
|---|---|---|
| Amaranthus spp. | - | zurückgekrümmter Fuchsschwanz |
| Arachys hypogaea | Arachys hyp. | Erdnuß |
| Chenopodium album | Chenop. alb. | Weißer Gänsefuß |
| Euphorbia geniculata | Euphorbia genic. | Südamerikanische Wolfsmilchart |
| Glycine max | - | Soja |
| Lamium purpureum | Lamium purp. | Rote Taubnessel |
| Oryza sativa | Oryza sativ. | Reis |
| Sesbania exaltata | Sesbania exalt. | Turibaum |
| Sida spinosa | Sida spin. | - |
| Sinapis alba | - | Weißer Senf |
| Triticum aestivum | Tritic. aest. | Weizen |
| Zea mays | - | Mais |

| Botanischer Name | Deutscher Name |
|---|---|
| Amaranthus retroflexus | zurückgekrümmter Fuchsschwanz |
| Cassia tora | - |
| Galium aparine | Klettenlabkraut |
| Hordeum vulgare | Gerste |
| Lamium spp. | Taubnessel-Arten |

Als Kulturgefäße dienten Plastikblumentöpfe mit 300 $cm^3$ Inhalt und lehmigem Sand mit etwa 1,5 % Humus als Substrat. Die Samen der Testpflanzen wurden nach Arten getrennt flach eingesät. Bei Soja setzte man etwas Torf (peat) zu, um ein besseres Wachstum zu gewährleisten. Ebenso zog man im Gegensatz zu der sonst benutzten Erde die Reispflanzen in einem mit Torfmull angereicherten Substrat an. Eine Beeinträchtigung der Ergebnisse ist bei den Blattbehandlungen (Nachauflaufanwendungen) nicht zu befürchten, zumal die bekannten Vergleichsmittel unter den gleichen Umständen eingesetzt werden. Für diese Nachauflaufbehandlung verwendete man direkt gesäte und in den gleichen Gefäßen aufgewachsene Pflanzen, oder sie wurden erst als Keimpflanzen getrennt angezogen und einige Tage vor der Behandlung in die Versuchsgefäße umgepflanzt. Die Testpflanzen hatten dann je nach Wuchsform eine Höhe von 3 bis 15 cm. Das Aufbringen der Wirkstoffe geschah so, daß man Spritzpulver oder Emulsionskonzentrate der Wirkstoffe in Wasser als Verteilungsmittel suspendierte oder emulgierte und mittels fein verteilender Düsen spritzte. Als bekannte Vergleichsmittel wählte man

(A) 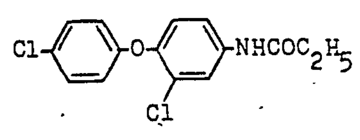 (US-PS 3 976 470)

und

(B) 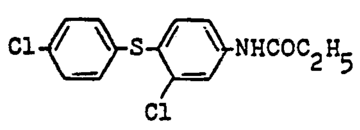 (GB-PS 1 344 735)

und

(C) 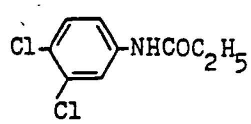 (GB-PS 903 766).

Die Aufwandmengen für die Nachauflaufanwendung variierten je nach Wirkstoff. Sie betrugen im Einzelfall 0,25, 0,5 oder 1,0 kg Wirkstoff pro ha.

Bei der Vorauflaufanwendung brachte man die Wirkstoffe unmittelbar nach dem Einsäen der Testpflanzen ebenfalls in Wasser als Verteilungsmedium auf. Kurz zuvor oder danach wurde leicht beregnet, um das Quellen und Keimen der Samen in Gang zu setzen. Danach steckte man die Töpfe mit durchsichtigen Plastikhauben ab, um ein gleichmäßiges Auflaufen zu gewährleisten, sofern dieses nicht durch die Wirkstoffe beeinträchtigt wurde.

Die Versuchsgefäße wurden im Gewächshaus aufgestellt, wobei für wärmeliebende Arten wärmere Bereiche (20 bis 35 °C) und für solche gemäßigter Klimate 10 bis 25 °C bevorzugt wurden. Die Versuchsperiode erstreckte sich über 2 bis 4 Wochen. Während dieser Zeit wurden die Pflanzen gepflegt, und ihre Reaktion auf die einzelnen Behandlungen wurde ausgewertet. Bewertet wurde nach einer Skala von 0 bis 100. Dabei bedeutet 0 keine Schädigung oder normaler Ablauf und 100 kein Aufgang der Pflanzen bzw. völlige Zerstörung zumindest der oberirdischen Teile.

Bei der Prüfung im Gewächshaus auf selektive herbizide Wirkung bei Nachauflaufanwendung verhielt sich Verbindung Nr. 27 mit 0,5 kg Wirkstoff/ha gegenüber der Kulturpflanze Soja wesentlich verträglicher als das bekannte Vergleichsmittel A und bekämpfte gleichzeitig wichtige breitblättrige Unkräuter.

Ebenso erbrachten die Gewächshausversuche, daß die Verbindung Nr. 20 bei Nachauflaufanwendung von 1,0 kg/ha bei ausgezeichneter herbizider Aktivität weder die Sojapflanzen noch den Mais schädigte. Die Vergleichsverbindung C richtete erhebliche Schäden an. die beiden chemisch näher liegenden bekannten Vergleichsmittel A und B schädigten diese Kulturen ebenfalls erheblich, wenn auch nicht ganz so stark wie das Mittel C.

Die Gewächshausversuche ergaben ferner, daß die neuen Anilide, wie z. B. die Verbindungen Nr. 5 und Nr. 1 mit 0,5 kg Wirkstoff/ha bei Nachauflaufanwendung hochwirksam sind gegen verschiedene breitblättrige Unkrautarten, ohne Erdnußpflanzen zu schädigen.

Ebenfalls bei der Prüfung im Gewächshaus bei Nachauflaufanwendung waren die Wirkstoffe Nr. 2, 3, 6, 10, 13, 14, 17, 21, 23, 28, 29, 30 mit 1,0 kg/ha mehr oder weniger stark wirksam gegen breitblättrige unerwünschte Pflanzen mit klaren Verträglichkeiten für Reis- und Weizenpflanzen.

Weiterhin zeigten sich in diesen Gewächshausversuchen bei Nachauflaufanwendung die Verbindungen Nr. 9 mit 0,25 kg Wirkstoff/ha und die Verbindung Nr. 16 mit 0,5 kg/ha gut wirksam gegen breitblättrige unerwünschte Pflanzen mit Selektivitäten in Kulturpflanzen, wie Reis, Weizen, Erdnüssen und Soja. Gute herbizide Wirkungen gegen breitblättrige Unkräuter und ohne die Getreideart Gerste zu schädigen, zeigte die Verbindung Nr. 28 mit 0,5 kg/ha im Nachauflaufverfahren.

Herbizide Aktivität bei Vorauflaufanwendung von 3,0 kg Wirkstoff/ha zeigten mit Sinapis alba als breitblättrige Testpflanze die Verbindungen Nr. 14, 11, 17.

Die Applikation der Mittel kann beim Auflaufen der unerwünschten Pflanzen vorzugsweise aber nach dem Auflaufen derselben erfolgen (Blattbehandlung). Sind die Wirkstoffe für gewisse Kulturpflanzen weniger verträglich, so können auch Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (postdirected, lay-by).

Die Aufwandmengen am Wirkstoff betragen je nach Jahreszeit und Wachstumsstadium 0,1 bis 10 kg Wirkstoff je ha und mehr.

Zur Verbreiterung des Wirkungsspektrums und zur Erzielung synergistischer Effekte können die neuen Anilide mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, wie z. B. das 3-Isopropyl-2,1,3-benzothiadiazinon-(4)-2,2-dioxid und dessen Na-Salz, 2,6-Dinitroaniline, N-Phenylcarbamate, thiolcarbamate, Halogencarbonsäuren, Triazine, Amide, Harnstoffe, Diphenylether, Triazinone, Uracile, Benzofuranderivate, Cyclohexan-1,3-dionderivate und andere in Betracht.

Außerdem ist es nützlich, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden. Es können auch nichtphytotoxische Öle und Ölkonzentrate zugesetzt werden.

Die Anwendung der Wirkstoffe erfolgt z. B. in Form von direkt versprühbaren Lösungen, Pulvern, Suspensionen oder Dispersionen, Emulsionen, Öldispersionen, Pasten, Stäubemitteln Streumitteln, Granulaten durch Versprühen, Streichen, Tränken, Vernebeln, Verstäuben, Verstreuen oder Gießen. Die Anwendungsformen richten sich ganz nach den Verwendungszwecken ; sie sollen in jedem Fall möglichst die feinste Verteilung der neuen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlenwasserstoffe, zum Beispiel Benzol, Toluol, Xylol, Paraffin, Tetrahydronaphthalin,

alkylierte Naphthaline oder deren Derivate zum Beispiel Methanol, Ethanol, Propanol, Butanol, Chloroform, Tetrachlorkohlenstoff, Cyclohexanol, Cyclohexanon, Chlorbenzol, Isophoron usw., stark polare Lösungsmittel, z. B. Dimethylformamid, Dimethylsulfoxid, N-Methylpyrrolidon, Wasser usw. in Betracht.

Wäßrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

An oberflächenaktiven Stoffen sind zu nennen :

Alkali-, Erdalkali-, Ammoniumsalze von Ligninsulfonsäure, Naphthalinsulfonsäuren, Phenolsulfonsäuren, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol-, Octylphenol-, Nonylphenol, Alkylphenolpolyglykolether. Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden wie Kieselsäuren, Silikate, Talkum, Kaolin, Kalk, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Die Mittel enthalten 0,1 bis 90 Gew.%, insbesondere 1 bis 60 % Wirkstoff.

Beispiele für solche Zubereitungen sind :

Beispiel I

Man vermischt 90 Gewichtsteile der Verbindung 1 mit 10 Gewichtsteilen N-Methyl-alpha-pyrrolidon und erhält eine Lösung, die zur Anwendung in Form kleinster Tropfen geeignet ist.

Beispiel II

10 Gewichtsteile der Verbindung 27 werden in einer Mischung gelöst, die aus 90 Gewichtsteilen Xylol, 6 Gewichtsteilen des Anlagerungsproduktes von 8 bis 10 Mol Ethylenoxid an 1 Mol Ölsäure-N-mono-ethanolamid, 2 Gewichtsteilen Calciumsalz der Dodecylbenzolsulfonsäure und 2 Gewichtsteilen des Anlagerungsproduktes von 40 Mol Ethylenoxid an 1 Mol Ricinusöl besteht.

Beispiel III

20 Gewichtsteile der Verbindung 20 werden in einer Mischung gelöst, die aus 60 Gewichtsteilen Cyclohexanon, 30 Gewichtsteilen Isobutanol, 5 Gewichtsteilen des Anlagerungsproduktes von 7 Mol Ethylenoxid an 1 Mol Isooctylphenol und 5 Gewichtsteilen des Anlagerungsproduktes von 40 Mol Ethylenoxid an 1 Mol Ricinusöl besteht.

Beispiel IV

20 Gewichtsteile der Verbindung 1 werden in einer Mischung gelöst, die aus 25 Gewichtsteilen Cyclohexanon, 65 Gewichtsteilen einer Mineralölfraktion vom Siedepunkt 210 bis 280 °C und 10 Gewichtsteilen des Anlagerungsproduktes von 40 Mol Ethylenoxid an 1 Mol Ricinusöl besteht.

Beispiel V

80 Gewichtsteile der Verbindung 5 werden mit 3 Gewichtsteilen des Natriumsalzes der Diisobutylnaphthalin-alphasulfonsäure, 10 Gewichtsteilen des Natriumsalzes einer Ligninsulfonsäure aus einer Sulfit-Ablauge und 7 Gewichtsteilen pulverförmigem Kieselsäuregel gut vermischt und in einer Hammermühle vermahlen.

Beispiel VI

5 Gewichtsteile der Verbindung 2 werden mit 95 Gewichtsteilen feinteiligem Kaolin innig vermischt.

man erhält auf diese Weise ein Stäubemittel, das 5 Gewichtsprozent des Wirkstoffs enthält.

Beispiel VII

30 Gewichtsprozent der Verbindung 3 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Beispiel VIII

40 Gewichtsteile der Verbindung 6 werden mit 10 Teilen Natriumsalz eines Phenolsulfonsäure-harnstoff-formaldehyd-kondensats, 2 Teilen Kieselgel und 48 Teilen Wasser innig vermischt. Man erhält eine stabile wäßrige Dispersion.

Beispiel IX

20 Teile der Verbindung 1 werden mit 12 Teilen Calciumsalz der Dodecylbenzolsulfonsäure, 8 Teile Fettalkoholpolyglykolether, 2 Teilen Natriumsalz eines Phenolsulfonsäure-harnstoff-formaldehyd-kondensats und 68 Teilen eines paraffinischen Mineralöls innig vermischt. Man erhält eine stabile ölige Dispersion.

**Ansprüche**

1. Anilide der allgemeinen Formel I

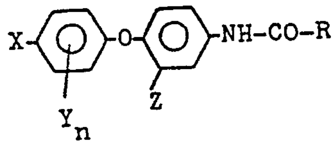 . (I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy- Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy oder

X und Y gemeinsam einen 3- oder 4-gliedrigen Alkylen- oder Alkenylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen bedeuten und Z für Trifluormethyl steht, wenn X Halogenalkoxy ist.

2. Herbizid, enthaltend ein Anilid der allgemeinen Formel I

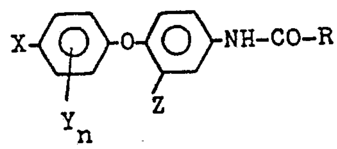 (I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy oder

X und Y gemeinsam einen 3- oder 4-gliedrigen Alkylen- oder Alkenylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen bedeuten und Z für Trifluormethyl steht, wenn X Halogenalkoxy ist.

3. Herbizid, enthaltend inerte Zusatzstoffe und ein Anilid der allgemeinen Formel I

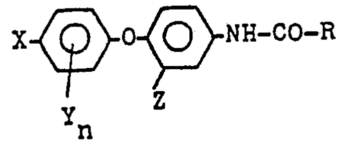

(I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy oder

X und Y gemeinsam einen 3- oder 4-gliedrigen Alkylen- oder Alkenylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen bedeuten und Z für Trifluormethyl steht, wenn X Halogenalkoxy ist.

4. Verfahren zur Herstellung eines Herbizids, dadurch gekennzeichnet, daß man einen festen oder flüssigen Trägerstoff mit einem Anilid der allgemeinen Formel I

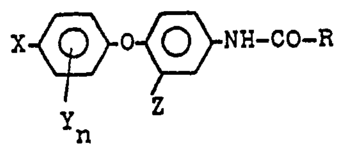

(I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy oder

X un Y gemeinsam einen 3- oder 4-gliedrigen Alkylen- oder Alkenylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen bedeuten und Z für Trifluormethyl steht, wenn X Halogenalkoxy ist, vermischt.

5. Verfahren zur Bekämpfung unerwünschten Pflanzenwuchses, dadurch gekennzeichnet, daß man den Boden oder die Pflanzen mit einer herbizid wirksamen Menge eines Anilids der allgemeinen Formel I

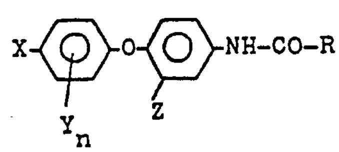

(I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy oder

X und Y gemeinsam einen 3- oder 4-gliedrigen Alkylen- oder Alkenylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen bedeuten und Z für Trifluormethyl steht, wenn X Halognealkoxy ist, behandelt.

6. Verfahren zur Herstellung eines Anilids der allgemeinen Formel I

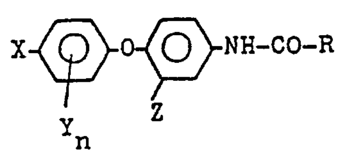

(I)

in der

X Wasserstoff, Fluor, Brom, Jod, einen Alkyl-, Alkoxy-, Halogenalkyl- oder Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy,

Y Wasserstoff, Halogen, einen Alkyl-, Alkoxy-, Halogenalkyl-, Halogenalkoxy-, Alkylthio-, Alkylsulfinyl- oder Alkylsulfonylrest mit 1 bis 6 Kohlenstoffatomen, einen Cycloalkylrest mit 3 bis 6 Kohlenstoffatomen, Phenyl, Benzyl oder Benzyloxy oder

X und Y gemeinsam einen 3- oder 4-gliedrigen alkylen- oder Alkenylenrest,

n 1 oder 2,

Z Wasserstoff oder Halogen und

R Alkyl mit 1 bis 4 Kohlenstoffatomen oder Alkoxyalkyl mit 2 bis 5 Kohlenstoffatomen bedeuten und

Z für Trifluormethyl steht, wenn X Halogenalkoxy ist, dadurch gekennzeichnet, daß man ein Anilid der Formel II

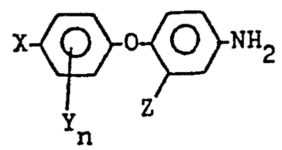

(II)

in der X, Y, Z und n die obengenannten Bedeutungen haben, in Gegenwart eines säurebindenden Mittels und eines Lösungsmittels mit einem Carbonsäurechlorid der Formel III

R—CO—Cl (III)

oder dem Anhydrid der entsprechenden Carbonsäure, in der R die obengenannte Bedeutung hat, umsetzt.

7. Anilid, ausgewählt aus der Gruppe bestehend aus N-4-(4-Ethylphenoxy)-3-chlorphenyl-propionsäureamid, N-4-(4-Difluormethoxyphenoxy)-3-chlorphenyl-propionsäureamid, N-4-(4-Methylthiophenoxy)-3-chlorphenyl-propionsäureamid, N-4-(3-Methoxyphenoxy)-3-chlorphenyl-propionsäureamid.

8. Herbizid, enthaltend ein Anilid, ausgewählt aus der Gruppe bestehend aus N-4-(4-Ethylphenoxy)-3-chlorphenyl-propionsäureamid, N-4-(4-Difluormethoxyphenoxy)-3-chlorphenyl-priopionsäureamid, N-4-(4-Methylthiophenoxy)-3-chlorphenyl-propionsäureamid, N-4-(3-Methoxyphenoxy)-3-chlorphenyl-propionsäureamid.

9. Herbizid, enthaltend inerte Zusatzstoffe und ein Anilid, ausgewählt aus der Gruppe bestehend aus N-4-(4-Ethylphenoxy)-3-chlorphenyl-propionsäureamid, N-4-(4-Difluormethoxyphenoxy)-3-chlorphenyl-propionsäureamid, N-4-(4-Methylthiophenoxy)-3-chlorphenyl-propionsäureamid, N-4-(3-Methoxyphenoxy)-3-chlorphenyl-propionsäureamid.

## Claims

1. An anilide of the general formula I

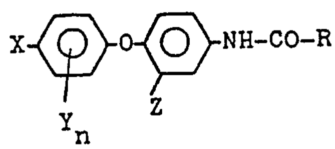

(I)

where

X is hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl oder benzyloxy, and

Y is hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, or

X and Y together are a 3-membered or 4-membered alkylene or alkenylene radical,

n is 1 or 2, Z is hydrogen or halogen and

R is alkyl of 1 to 4 carbon atoms or alkoxyalkyl of 2 to 5 carbon atoms, and

Z is trifluoromethyl if X is haloalkoxy.

2. A herbicide containing an anilide of the general formula I

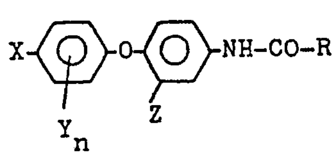

(I)

where

X is hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl oder benzyloxy, and

Y is hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, or

X and Y together are a 3-membered or 4-membered alkylene or alkenylene radical,

n is 1 or 2,

Z is hydrogen or halogen and

R is alkyl of 1 to 4 carbon atoms or alkoxyalkyl of 2 to 5 carbon atoms, and

Z is trifluoromethyl if X is haloalkoxy.

3. A herbicide containing inert additives and an anilide of the general formula I

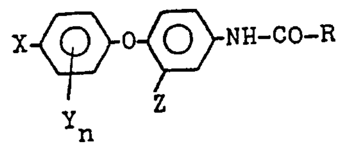

(I)

where

X is hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl oder benzyloxy, and

Y is hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, or

X and Y together are a 3-membered or 4-membered alkylene or alkenylene radical,

n is 1 or 2, Z is hydrogen or halogen and

R is alkyl of 1 to 4 carbon atoms or alkoxyalkyl of 2 to 5 carbon atoms, and

Z is trifluoromethyl if X is haloalkoxy.

4. A process for the production of a herbicide, wherein a solid or liquid carrier is mixed with an anilide of the general formula I

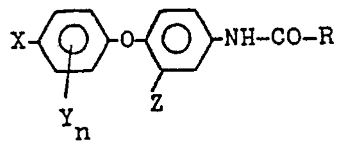

(I)

where

X is hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, and

Y is hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, or

X und Y together are a 3-membered or 4-membered alkylene or alkenylene radical,

n is 1 or 2, Z is hydrogen or halogen and

R is alkyl of 1 to 4 carbon atoms or alkoxyalkyl of 2 to 5 carbon atoms, and

Z is trifluoromethyl if X is haloalkoxy.

5. A process for combating unwanted plant growth, wherein the soil or the plants are treated with a herbicidally effective amount of an anilide of the general formula I

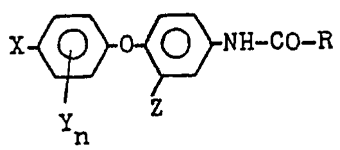

(I)

where

X is hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl oder benzyloxy, and

Y is hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, or

X and Y together are a 3-membered or 4-membered alkylene or alkenylene radical,

n is 1 or 2, Z is hydrogen or halogen and

R is alkyl of 1 to 4 carbon atoms or alkoxyalkyl of 2 to 5 carbon atoms, and

Z is trifluoromethyl if X is haloalkoxy.

6. A process for the preparation of an anilide of the general formula I

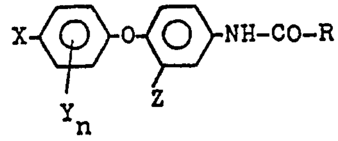

(I)

where

X is hydrogen, fluorine, bromine, iodine, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl or benzyloxy, and

Y is hydrogen, halogen, alkyl, alkoxy, haloalkyl, haloalkoxy, alkylthio, alkylsulfinyl or alkylsulfonyl of 1 to 6 carbon atoms, cycloalkyl of 3 to 6 carbon atoms, phenyl, benzyl oder benzyloxy, or

X and Y together are a 3-membered or 4-membered alkylene or alkenylene radical,

n is 1 or 2, Z is hydrogen or halogen and

R is alkyl of 1 to 4 carbon atoms or alkoxyalkyl of 2 to 5 carbon atoms, and

Z is trifluoromethyl if X is haloalkoxy, wherein an anilide of the formula II

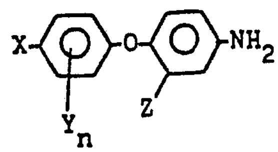

(II)

where X, Y, Z and n have the above meanings, is reacted with a carboxylic acid chloride of the formula III

Cl—CO—R (III)

where R has the above meanings, or the anhydride of the carboxylic acid concerned, in the presence of an acid acceptor and a solvent.

7. An anilide selected from the group consisting of N-4-(4-ethylphenoxy)-3-chlorophenylpropionamide, N-4-(4-difluoromethoxyphenoxy)-3-chlorophenylpropionamide, N-4-(4-methylthiophenoxy)-3-chlorophenylpropionamide, and N-4-(3-methoxyphenoxy)-3-chlorophenylpropionamide.

8. A herbicide containing an anilide selected from the group consisting of N-4-(4-ethylphenoxy)-3-chlorophenyl-propionamide, N-4-(4-difluoromethoxyphenoxy)-3-chlorophenylpropionamide, N-4-(4-methylthiophenoxy)-3-chlorophenylpropionamide, and N-4-(3-methoxyphenoxy)-3-chlorophenylpropionamide.

9. A herbicide containing inert additives and an anilide selected from the group consisting of N-4-(4-ethylphenoxy)-3-chlorophenylpropionamide, N-4-(4-difluoromethoxyphenoxy)-3-chlorophenylpropionamide, N-4-(4-methylthiophenoxy)-3-chlorophenylpropionamide, and N-4-(3-methoxyphenoxy)-3-chlorophenylpropionamide.

**Revendications**

1. Anilides de formule générale I

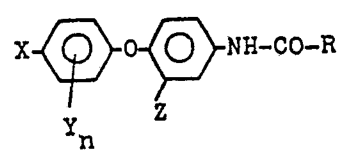

(I)

dans laquelle

X représente hydrogène, fluor, brome, iode, un reste alkyle, alcoxy, halogénoalkyle, ou halogénoalcoxy, alkylthio, alkylsulfinyle ou alkylsulfonyle, de 1 à 6 atomes de carbone, un reste cycloalkyle de 3 à 6 atomes de carbone, phényle, benzyle, ou benzyloxy,

Y représente hydrogène, halogène, un reste alkyle, alcoxy, halogénalkyle, halogénalcoxy, alkylthio, alkylsulfinyle ou alkylsulfonyle, de 1 à 6 atomes de carbone, un reste cycloalkyle de 3 à 6 atomes de carbone, phényle, benzyle ou benzyloxy ou

X et Y représentent ensemble un reste alkylène ou alcénylène, de 3 à 4 chaînons,

n représente 1 ou 2,

Z hydrogène ou halogène et

R alkyle de 1 à 4 atomes de carbone ou alcoxyalkyle de 2 à 5 atomes de carbone et

Z représente trifluorométhyle, lorsque X est halogènalcoxy.

2. Herbicide contenant un anilide de formule générale I

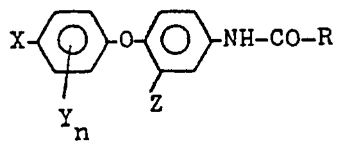

(I)

dans laquelle

X représente hydrogène, fluor, brome, iode, un reste alkyle alcoxy, halogénoalkyle, ou halogénoalcoxy, alkylthio, alkylsulfinyle ou alkylsulfonyle, de 1 à 6 atomes de carbone, un reste cycloalkyle de 3 à 6 atomes de carbone, phényle, benzyle, ou benzyloxy,

Y représente hydrogène, halogène, un reste alkyle, alcoxy, halogénalkyle, halogénalcoxy, alkylthio, alkylsulfinyle ou alkylsulfonyle, de 1 à 6 atomes de carbone, un reste cycloalkyle de 3 à 6 atomes de carbone, phényle, benzyle ou benzyloxy ou

X et Y représentent ensemble un reste alkylène ou alcénylène, de 3 à 4 chaînons,

n représente 1 ou 2,

Z hydrogène ou halogène et

R alkyle de 1 à 4 atomes de carbone ou alcoxyalkyle de 2 à 5 atomes de carbone et

Z représente trifluorométhyle, lorsque X est halogènalcoxy.

3. Herbicide contenant des additifs inertes et un anilide de formule générale I

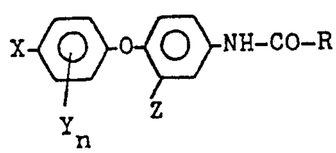

(I)

dans laquelle

X représente hydrogène, fluor, brome, iode, un reste alkyle alcoxy, halogénoalkyle, ou halogénoalcoxy, alkylthio, alkylsulfinyle ou alkylsulfonyle, de 1 à 6 atomes de carbone, un reste cycloalkyle de 3 à 6 atomes de carbone, phényle, benzyle, ou benzyloxy,

Y représente hydrogène, halogène, un reste alkyle, alcoxy, halogénalkyle, halogénalcoxy, alkylthio, alkylsulfinyle ou alkylsulfonyle, de 1 à 6 atomes de carbone, un reste cycloalkyle de 3 à 6 atomes de carbone, phényle, benzyle ou benzyloxy ou

X et Y représentent ensemble un reste alkylène ou alcénylène, de 3 à 4 chaînons,

n représente 1 ou 2,

Z hydrogène ou halogène et

R alkyle de 1 à 4 atomes de carbone ou alcoxyalkyle de 2 à 5 atomes de carbone et

Z représente trifluorométhyle, lorsque X est halogènalcoxy.

4. Procédé de préparation d'un herbicide, caractérisé par le fait qu'on mélange un support solide ou liquide avec un anilide de formule générale I

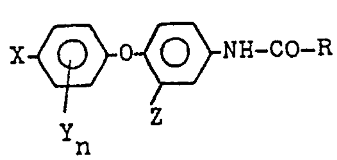

(I)

dans laquelle

X représente hydrogène, fluor, brome, iode, un reste alkyle alcoxy, halogénoalkyle, ou halogénoalcoxy, alkylthio, alkylsulfinyle ou alkylsulfonyle, de 1 à 6 atomes de carbone, un reste cycloalkyle de 3 à 6 atomes de carbone, phényle, benzyle, ou benzyloxy,

Y représente hydrogène, halogène, un reste lakyle, alcoxy, halogénalkyle, halogénalcoxy, alkylthio, alkylsulfinyle ou alkylsulfonyle, de 1 à 6 atomes de carbone, un reste cycloalkyle de 3 à 6 atomes de carbone, phényle, benzyle ou benzyloxy ou

X et Y représentent ensemble un reste alkylène ou alcénylène, de 3 à 4 chaînons,

n représente 1 ou 2,

Z hydrogène ou halogène et

R alkyle de 1 à 4 atomes de carbone ou alcoxyalkyle de 2 à 5 atomes de carbone et

Z représente trifluorométhyle, lorsque X est halogénalcoxy.

5. Procédé de lutte contre la croissance des plantes indésirables, caractérisé par le fait qu'on traite le sol ou les plantes avec une quantité efficace, comme herbicide, d'un anilide de formule générale I

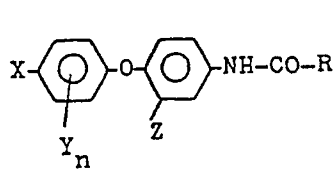

(I)

dans laquelle

X représente hydrogène, fluor, brome, iode, un reste alkyle, alcoxy, halogénoalkyle, ou halogénoalcoxy, alkylthio, alkylsulfinyle ou alkylsulfonyle, de 1 à 6 atomes de carbone, un reste cycloalkyle de 3 à 6 atomes de carbone, phényle, benzyle, ou benzyloxy,

Y représente hydrogène, halogène, un reste alkyle, alcoxy, halogénalkyle, halogénalcoxy, alkylthio, alkylsulfinyle ou alkylsulfonyle, de 1 à 6 atomes de carbone, un reste cycloalkyle de 3 à 6 atomes de carbone, phényle, benzyle ou benzyloxy ou

X et Y représentent ensemble un reste alkylène ou alcénylène, de 3 à 4 chaînons,

n représente 1 ou 2,

Z hydrogène ou halogène et

R alkyle de 1 à 4 atomes de carbone ou alcoxyalkyle de 2 à 5 atomes de carbone et

Z représente trifluorométhyle, lorsque X est halogènalcoxy.

6. Procédé de préparation d'un anilide de formule générale I

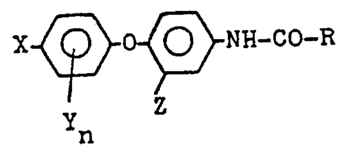

(I)

dans laquelle

X représente hydrogène, fluor, brome, iode, un reste alkyle alcoxy, halogénoalkyle, ou halogénoalcoxy, alkylthio, alkylsulfinyle ou alkylsulfonyle, de 1 à 6 atomes de carbone, un reste cycloalkyle de 3 à 6 atomes de carbone, phényle, benzyle, ou benzyloxy,

Y représente hydrogène, halogène, un reste alkyle, alcoxy, halogénalkyle, halogénalcoxy, alkylthio, alkylsulfinyle ou alkylsulfonyle, de 1 à 6 atomes de carbone, un reste cycloalkyle de 3 à 6 atomes de carbone, phényle, benzyle ou benzyloxy ou

X et Y représentent ensemble un reste alkylène ou alcénylène, de 3 à 4 chaînons,

n représente 1 ou 2,

Z hydrogène ou halogène et

R alkyle de 1 à 4 atomes de carbone ou alcoxyalkyle de 2 à 5 atomes de carbone et

Z représente trifluorométhyle, lorsque X est halogènalcoxy, caractérisé par le fait qu'on fait réagir un anilide de formule II

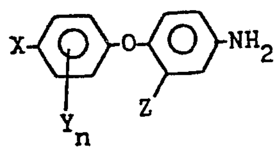

(II)

dans laquelle X, Y, Z et n ont les sifnifications sus-indiquées, en présence d'un agent liant les acides et d'un solvant, avec un chlorure d'acide carboxylique de formule III

$$R—CO—Cl \qquad (III)$$

ou l'anhydride de l'acide carboxylique correspondant, dans laquelle R a la signification sus-indiquée.

7. Anilide choisi dans le groupe constitué des anilides d'acides N-4-(4-éthylphénoxy)-3-chlorophényl-propionique, N-4-(4-difluorométhoxyphénoxy)-3-chlorophényl-propionique, N-4-(4-méthylthiophénoxy)-3-chlorophényl-propionique, N-4-(3-méthoxyphénoxy)-3-chlorophényl-propionique.

8. Herbicide contenant un anilide choisi dans le groupe constitué des anilides d'acides N-4-(4-éthylphénoxy)-3-chlorophényl-propionique, N-4-(4-difluorométhoxyphénoxy)-3-chlorophényl-propionique, N-4-(4-méthylthiophénoxy)-3-chlorophényl-propionique, N-4-(3-méthoxyphénoxy)-3-chlorophényl-propionique.

9. Herbicide contenant des additifs inertes et un anilide choisi dans le groupe constitué des anilides d'acides N-4-(4-éthylphénoxy)-3-chlorophényl-propionique, N-4-(4-difluorométhoxyphénoxy)-3-chlorophényl-propionique, N-4-(4-méthylthiophénoxy)-3-chlorophényl-propionique, N-4-(3-méthoxyphénoxy)-3-chlorophényl-propionique.